# EUROPÄISCHE PATENTSCHRIFT

(11) **EP 3 286 687 B1**
(45) Veröffentlichungstag und Bekanntmachung des Hinweises auf die Patenterteilung: **27.03.2019**
(21) Anmeldenummer: 16718323.5
(22) Anmeldetag: 21.04.2016
(51) Int. Cl.: G06F 21/79, H03M 7/30

(54) **VERFAHREN ZUR KOMPRESSION VON NUTZERDATEN EINES DOKUMENTS**
METHOD FOR COMPRESSING USER DATA OF A DOCUMENT
PROCÉDÉ DE COMPRESSION DE DONNÉES D'UTILISATEUR D'UN DOCUMENT

(30) Priorität: 23.04.2015 DE 102015207428
(43) Veröffentlichungstag der Anmeldung: 28.02.2018
(73) Patentinhaber: Bundesdruckerei GmbH, 10969 Berlin (DE)
(72) Erfinder: MÜLLER, Frank, 10407 Berlin (DE); SCHOLZE, Steffen, 13469 Berlin (DE); SCHWAN, Matthias, 10437 Berlin (DE); WIRTH, Klaus-Dieter, 12683 Berlin (DE); FILZHUTH, Elke, 12359 Berlin (DE)
(74) Vertreter: Richardt Patentanwälte PartG mbB
(86) Internationale Anmeldenummer: PCT/EP2016/058899
(87) Internationale Veröffentlichungsnummer: WO 2016/170055

(56) Entgegenhaltungen:
- DE-A1-102005 045 149
- US-A- 5 499 293
- US-A1- 2005 231 765

## Beschreibung

Die Erfindung betrifft ein Verfahren zur Kompression von Nutzerdaten eines Dokuments durch ein Chipkartenterminal sowie ein Chipkartenterminal und ein System aus einem solchen Chipkartenterminal und einem Dokument.

Im Stand der Technik ist eine Vielzahl von Dokumenten, insbesondere Sicherheits- oder Ausweisdokumente bekannt, welche als Chipkarte mit einer Rechenlogik ausgeführt sind. Dabei werden üblicherweise in einem nichtflüchtigen Speicherbereich der Chipkarte Nutzerdaten wie beispielsweise Passbilder, Fingerabdrücke oder Ähnliches gespeichert, welche durch einen Prozessor der Chipkarte beispielsweise im Zuge eines Authentifizierungsverfahrens zur Feststellung der Identität eines Dokumenteninhabers benutzt werden können.

Chipkarten werden heutzutage mit einem in seiner nutzbaren Speichergröße stark begrenzten internen Speicher gefertigt. Insbesondere bei der Verwendung einer Chipkarte als Ausweisdokument wird über die Lebensdauer der Chipkarte eine Vielzahl von Daten in den Speicher der Chipkarte abgelegt. Da der Speicher der Chipkarte nicht nachträglich vergrößert werden kann und insbesondere bei der Verwendung einer Chipkarte als Ausweisdokument eine Löschung von Daten von der Chipkarte nicht vorgesehen ist, wird früher oder später der Chipkartenspeicher nicht mehr für die reguläre Benutzung der Chipkarte als Ausweisdokument ausreichen.

Aus US 2005/231765 A1 (SO HIROKAZU [JP] ET AL) 20. Oktober 2005 ist ein Verfahren zur Defragmentierung von Nutzerdaten auf einer Chipkarte bekannt. Jedoch wird bei einer Defragmentierung nur ein geringer Teil des Speicherplatzes freigegeben.

Der vorliegenden Erfindung liegt daher die Aufgabe zugrunde, ein verbessertes Verfahren zur Verwaltung von Nutzerdaten in einem Dokument zu schaffen.

Diese Aufgabe wird jeweils mit den Merkmalen der unabhängigen Patentansprüche gelöst. Ausführungsformen der Erfindung sind mit den abhängigen Patentansprüchen angegeben. Sofern nicht ausdrücklich Gegenteiliges zum Ausdruck gebracht wird, können Ausführungsformen der Erfindung frei miteinander kombiniert werden. Unter einem "Dokument" wird hier insbesondere ein tragbares elektronisches Gerät verstanden, welches zumindest einen Datenspeicher zur Speicherung zumindest eines Attributs und eine Kommunikationsschnittstelle zum Auslesen des Attributs aufweist. Vorzugsweise hat das Dokument einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem Dokument um ein Wert- oder Sicherheitsdokument handeln. Unter einem Dokument werden erfindungsgemäß papierbasierte und/oder kunststoffbasierte Dokumente verstanden wie zum Beispiel elektronische Ausweisdokumente, insbesondere Reisepass, Personalausweis, Visa sowie Führerschein, Fahrzeugschein, Fahrzeugbrief, Firmenausweis, Gesundheitskarte oder andere ID-Dokumente und Signaturkarten sowie auch Chipkartenzahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Unter einem "geschützten Speicher" wird im Folgenden ein insbesondere nichtflüchtiger elektronischer Speicher verstanden, welcher einen Zugriff auf in dem Speicher gespeicherte Daten nur nach Überprüfung einer kryptografischen Zugangsbedingung zulässt. Ferner kann ein geschützter Speicher über eine Zugriffsverwaltung verfügen, welche bestimmten Nutzern, welche eine entsprechende Zugriffsberechtigung haben, den Zugriff auf in dem Speicher gespeicherte Daten nach Identifikation des Nutzers gewährt. Es ist jedoch nicht möglich, die Daten ohne entsprechende Berechtigung aus dem geschützten Speicher auszulesen.

Unter "Nutzerdaten" werden im Folgenden Daten verstanden, welche einem Dokumenteninhaber oder einem Dokument zugeordnet sind und beispielsweise zu deren Identifikation dienen. So kann es sich bei Nutzerdaten beispielsweise um biometrische Passbilder, Geburtsdaten, Fingerabdrücke, Identifikationsnummern, Kartennummern, Herausgeberinformationen oder ähnliches handeln.

In einem Aspekt betrifft die Erfindung ein Verfahren zur Kompression von Nutzerdaten eines Dokuments durch ein Chipkartenterminal, wobei das Dokument mindestens einen geschützten, nichtflüchtigen Speicher mit darin gespeicherten Nutzerdaten aufweist. Das Chipkartenterminal weist dabei mindestens einen elektronischen Speicher, ein geschlossenes Gehäuse und einen mechanischen Einzug auf. Der mechanische Einzug ist dabei dazu ausgebildet, das Dokument gegen eine Entnahme aus dem Chipkartenterminal zu sichern bis das Verfahren zur Kompression der Nutzerdaten abgeschlossen ist.

Zur Kompression der Nutzerdaten des Dokuments wird das Dokument zunächst in den mechanischen Einzug des Chipkartenterminals eingezogen, sodass sich das Dokument nach dem Einziehen vollständig innerhalb des Gehäuses des Chipkartenterminals befindet. Hiermit kann sichergestellt werden, dass das Dokument während des Kompressionsvorgangs nicht aus dem Chipkartenterminal entnommen wird, da andernfalls ein Datenverlust durch Unterbrechung der Kommunikationsverbindung verursacht werden könnte. Anschließend werden die Nutzerdaten aus dem nichtflüchtigen Speicher des Dokuments in den elektronischen Speicher des Chipkartenterminals übertragen. Anschließend werden die Nutzerdaten durch das Chipkartenterminal komprimiert und zurück in den nichtflüchtigen Speicher des Dokuments übertragen. Abschließend wird das Dokument aus dem mechanischen Einzug ausgeworfen. Unter einem Auswerfen ist hierbei zu verstehen, dass das Dokument durch den mechanischen Einzug soweit freigegeben wird, dass ein Dokumenteninhaber das Dokument aus dem Chipkartenterminal entnehmen kann. Dies kann beispielsweise durch ein Auswerfen im Sinne einer Bewegung des Dokuments aus dem mechanischen Einzug geschehen oder der mechanische Einzug kann beispielsweise eine Klappe oder Öffnung freigeben, sodass das Dokument innerhalb des mechanischen Einzugs mit den Händen gegriffen werden kann.

Ausführungsformen der Erfindung könnten den Vorteil haben, dass durch die Kompression der Nutzerdaten der vorhandene Speicher des Dokuments logisch erweitert wird. Insgesamt wird es durch die Kompression von in dem Dokument zu speichernden Daten möglich, eine größere Menge an Daten in der Chipkarte zu speichern. Dabei kann je nach Art der Nutzerdaten eine verlustfreie oder eine verlustbehaftete Kompression verwendet werden.

Handelt es sich beispielsweise bei den Nutzerdaten um Passwörter, Geburtsdaten, Gültigkeitszeiträume oder Ähnliches, ist eine verlustfreie Kompressionsmethode vonnöten, da andernfalls kritische Dateninhalte der Nutzerdaten verloren gehen könnten. Handelt es sich bei den Nutzerdaten jedoch beispielsweise um Bilddaten wie Profilbilder, kann auch eine verlustbehaftete Kompressionsmethode Anwendung finden. Dies setzt jedoch voraus, dass in den Bilddaten keine sicherheitsrelevanten Merkmale aufgrund der verlustbehafteten Kompression verloren gehen. So wäre es beispielsweise unproblematisch, wenn in einem Profilbild die Frisur der abgebildeten Person aufgrund der Kompression mit Verlusten behaftet ist. Treten jedoch Verluste im Bereich biometrischer Merkmale wie der Position der Augen oder der relativen Lage von Augen zu Mund zu Nase auf, kann das Profilbild möglicherweise nicht mehr zur Identifikation des Dokumenteninhabers verwendet werden. In diesem Fall würde eine verlustbehaftete Kompression ausscheiden. Weitere Beispiele für Bilddaten, welche nicht oder nur schlecht für die Anwendung einer verlustbehafteten Kompression geeignet wären, sind Fingerabdrücke oder Daten, welche über eine Signatur der Daten abgesichert sind. Während die Kompression eines Fingerabdrucks wichtige Merkmale des Fingerabdrucks verfälschen könnte, könnte eine verlustbehaftete Kompression von Daten, die über Signaturen abgesichert sind, dazu führen, dass nach der Kompression die Signatur der Daten verändert ist. In diesem Fall wäre die Absicherung der Daten fehlerhaft.

Die Auslagerung des Kompressionsvorgangs aus dem Dokument in ein Chipkartenterminal könnte ferner den Vorteil haben, dass ein Terminal, worunter in dem Kontext der Erfindung ein Computersystem zu verstehen ist, üblicherweise in seiner Speicherkapazität und Rechenleistung nicht so stark beschränkt ist wie ein Dokument, welches beispielsweise als Ausweis verwendet wird. Somit kann durch das Auslagern des Kompressionsvorgangs die Logik innerhalb des Dokuments vereinfacht werden. Gleichzeitig muss innerhalb des Dokuments kein Speicherbereich für ein Programm zur Kompression von Daten vorgehalten werden.

Nach einer Ausführungsform weist das Dokument eine erste kontaktlose Kommunikationsschnittstelle auf, während das Chipkartenterminal eine zweite kontaktlose Kommunikationsschnittstelle aufweist. Das Verfahren beinhaltet dann das Aufbauen einer Kommunikationsverbindung zwischen dem Chipkartenterminal und dem Dokument über die erste und zweite kontaktlose Kommunikationsschnittstelle, Das Übertragen der Nutzerdaten in den elektronischen Speicher des Chipkartenterminals und das Übertragen der komprimierten Nutzerdaten in den nichtflüchtigen Speicher des Dokuments erfolgt dann über eben diese Kommunikationsverbindung.

Bei der Kommunikationsverbindung kann es sich beispielsweise um eine RFID- oder NFC-Verbindung handeln. Insbesondere die Kombination einer kontaktlosen Kommunikation zwischen Dokument und Chipkartenterminal und dem Einziehen des Dokuments in einen mechanischen Einzug könnte den Vorteil haben, dass durch den mechanischen Einzug ein vorzeitiges Entfernen des Dokuments aus dem Wirkbereich des Chipkartenterminals verhindert werden kann, während gleichzeitig die Mittel zur kontaktlosen Kommunikation zwischen Dokument und Chipkartenterminal in dem Dokument eingebettet werden können. Durch die üblicherweise bei Verwendung eines mechanischen Einzugs entstehende Reibung könnten nämlich Kontakte, welche zur kontaktbehafteten Datenübertragung genutzt werden, abgenutzt werden. Dieses Risiko wird jedoch durch die Einbettung beispielsweise einer Antenne in den Dokumentenkörper, bei der die Antenne an keiner Stelle aus dem Dokument herausragt, effektiv vermieden.

Nach einer Ausführungsform beinhaltet der Aufbau der Kommunikationsverbindung zwischen Chipkartenterminal und Dokument eine gegenseitige Authentisierung des Chipkartenterminals und des Dokuments. Hierdurch wird erfindungsgemäß ein sicherer Kommunikationskanal zwischen Chipkartenterminal und Dokument aufgebaut. Die Nutzerdaten werden dann ausschließlich über diesen sicheren Kommunikationskanal übermittelt. Ferner ist vorgesehen, dass das Chipkartenterminal nach erfolgreicher Authentisierung gegenüber dem Dokument Zugriff auf in dem nichtflüchtigen Speicher des Dokuments gespeicherte Nutzerdaten erhält.

Ausführungsformen der Erfindung könnten den Vorteil haben, dass durch die Sicherung der Kommunikation zwischen Dokument und Chipkartenterminal ein Ausspähen der übertragenen Nutzerdaten verhindert werden kann. Beispielsweise kann nach einer weiteren Ausführungsform zur Authentisierung ein Challenge-Response-Verfahren verwendet werden. Beispielsweise kann die Authentisierung über das Basic Access Control-Verfahren (BAC) oder über das Verfahren des Password Authenticated Connection Establishment (PACE) erfolgen.

Nach einer weiteren Ausführungsform der Erfindung löscht das Chipkartenterminal nach dem Übertragen der komprimierten Nutzerdaten in den nichtflüchtigen Speicher des Dokuments die komprimierten Nutzerdaten aus dem elektronischen Speicher des Chipkartenterminals. Hierdurch könnte verhindert werden, dass die Nutzerdaten nachträglich aus dem Chipkartenterminal ausgelesen und möglicherweise missbräuchlich verwendet werden. Demselben Grundgedanken folgt eine weitere Ausführungsform, wonach es sich bei dem elektronischen Speicher des Chipkartenterminals um einen flüchtigen Speicher handelt. Beispielsweise könnte der elektronische Speicher des Chipkartenterminals als Random Access Memory (RAM) ausgeführt sein. Dies hätte den Vorteil, dass bei einem Abschalten des Chipkartenterminals alle in dem Speicher des Chipkartenterminals gespeicherten Nutzerdaten aus vorangegangenen Kompressionsvorgängen automatisch gelöscht werden. Ein gezieltes Löschen der Nutzerdaten aus dem Speicher des Chipkartenterminals ist dann nicht mehr notwendig.

Nach einer weiteren Ausführungsform wird im Zuge des erfindungsgemäßen Verfahrens ein Nachlade-Token verwendet, wobei auf das Dokument nachzuladende Daten auf dem Nachlade-Token enthalten sind. Zu Beginn des Verfahrens wird der Nachlade-Token mit dem Chipkartenterminal verbunden. Beispielsweise kann es sich bei dem Nachlade-Token um eine Smartcard handeln, welche in das Chipkartenterminal eingesetzt wird. Dabei ist die Verbindung zwischen Chipkartenterminal und Nachlade-Token für eine Datenübertragung zwischen Chipkartenterminal und Nachlade-Token ausgebildet. Das Chipkartenterminal ist dann dazu ausgebildet, die nachzuladenden Daten aus dem Nachlade-Token zu extrahieren, zu komprimieren und in den nichtflüchtigen Speicher des Dokuments zu übertragen.

Nach einer weiteren Ausführungsform enthält das Dokument ein Zertifikat mit einem öffentlichen Schlüssel eines asymmetrischen Schlüsselpaars. Die auf das Dokument nachzuladenden Daten, welche in dem Nachlade-Token enthalten sind, enthalten dann eine kryptografische Signatur, wobei das Dokument dazu ausgebildet ist, nach Empfang der nachzuladenden Daten vom Chipkartenterminal die kryptografische Signatur der empfangenen Daten mit dem öffentlichen Schlüssel des Zertifikats zu verifizieren. Ferner ist das Dokument dazu ausgebildet, nachgeladene Daten, deren Signatur nicht mit dem öffentlichen Schlüssel verifiziert werden kann, aus dem nichtflüchtigen Speicher des Dokuments zu löschen. Da der öffentliche Schlüssel bzw. das Zertifikat üblicherweise während des Herstellungs- bzw. Konfigurationsvorgangs des Dokuments in dem Dokument gespeichert wird, kann ein Dokumenten-Herausgeber hierdurch festlegen, wer Daten auf das Dokument nachladen kann und wer nicht. So können ausschließlich solche Parteien Daten auf das Dokument nachladen, welche von dem Dokumenten-Herausgeber den entsprechenden privaten Schlüssel zur Verfügung gestellt bekommen, welche eine Signatur erzeugen kann, die mit dem öffentlichen Schlüssel des asymmetrischen Schlüsselpaares verifiziert werden kann. Dabei ist zu beachten, dass die Signatur entweder von den bereits komprimierten Daten gebildet werden muss oder eine Signaturmethode verwendet werden muss, die durch eine Kompression der Daten nicht verändert wird. Alternativ kann auch die Kompressionsmethode so angepasst werden, dass die Signatur des Dateninhalts der nachzuladenden Daten sich nicht ändert.

Nach einer Ausführungsform handelt es sich bei den nachzuladenden Daten um Visadaten.

In einem weiteren Aspekt betrifft die Erfindung ein Chipkartenterminal mit einem elektronischen Speicher und einem mechanischen Einzug, wobei der mechanische Einzug dazu ausgebildet ist, ein Dokument gegen eine Entnahme des Dokuments aus dem Chipkartenterminal zu sichern. Das Chipkartenterminal ist dabei dazu ausgebildet,
• das Dokument in den mechanischen Einzug einzuziehen.
• Nutzerdaten von dem Dokument zu empfangen und/oder aus dem Dokument zu extrahieren,
• die Nutzerdaten zu komprimieren,
• die komprimierten Nutzerdaten an das Dokument zu übermitteln und
• das Dokument aus dem mechanischen Einzug auszuwerfen.

Nach einer weiteren Ausführungsform weist das Chipkartenterminal Befestigungsmittel auf, wobei die Befestigungsmittel dazu ausgebildet sind, das Chipkartenterminal an einem Standort dauerhaft zu befestigen. Beispielsweise kann es sich bei den Befestigungsmitteln um Ösen oder Bohrungen handeln, durch welche das Chipkartenterminal mit dem Boden am Standort des Chipkartenterminals verschraubt werden kann. Somit kann sichergestellt werden, dass das Chipkartenterminal nicht durch Unbefugte entwendet wird.

In einem weiteren Aspekt betrifft die Erfindung ein elektronisches System mit einem Chipkartenterminal und einem Dokument, wobei das Dokument mindestens einen nichtflüchtigen Speicher mit darin enthaltenen Nutzerdaten aufweist.

Nach einer Ausführungsform handelt es sich bei dem Dokument um ein elektronisches Ausweisdokument, insbesondere Reisepass, Personalausweis, Visa, Führerschein, Fahrzeugschein, Fahrzeugbrief, Firmenausweis, eine Gesundheitskarte und/oder um elektronische Zahlungsmittel, insbesondere eine Banknote, Bankkarte, Kreditkarte, Frachtbriefe und/oder sonstige Berechtigungsnachweise.

Im Folgenden werden bevorzugt Ausführungsformen der Erfindung anhand der Zeichnungen näher erläutert. Es zeigen:
- Figur 1: ein Blockdiagramm eines Systems aus Dokument und Chipkartenterminal, und
- Figur 2: ein Flussdiagramm eines Ablaufs zur Kompression von Nutzerdaten eines Dokuments.

Im Folgenden werden einander ähnliche Elemente mit gleichen Bezugszeichen gekennzeichnet.

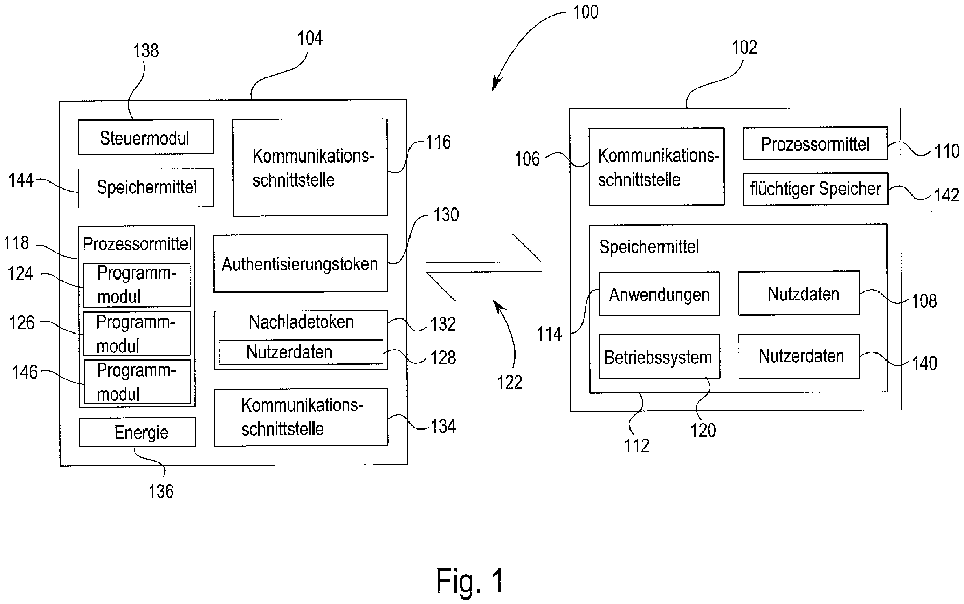

Die Figur 1 zeigt ein Blockdiagramm eines erfindungsgemäßen Systems 100 zur Kompression von Nutzerdaten 128 eines Dokuments 102 durch ein Chipkartenterminal 104. Dabei umfasst das Dokument 102 eine Kommunikationsschnittstelle 106. Ferner umfasst das Dokument 102 Prozessormittel 110 sowie nicht-flüchtige Speichermittel 112. Bei den Speichermitteln 112 kann es sich beispielsweise um einen nichtflüchtigen Flash-basierten Speicher handeln. Die Speichermittel 112 beinhalten in der hier dargestellten Ausführungsform eine logische Datenstruktur (LDS). In der logischen Datenstruktur sind neben einem Chipkartenbetriebssystem 120 und Nutzdaten 108 auch Anwendungen 114 des Dokuments 102, sowie Nutzerdaten 140 wie beispielsweise Visa-Daten enthalten. Ferner enthält das Dokument 102 einen flüchtigen Speicher 142, welcher als Arbeitsspeicher genutzt werden kann.

Das Chipkartenterminal 104 umfasst ebenfalls eine Kommunikationsschnittstelle 116, sowie Prozessormittel 118. Bei den Prozessormitteln 118 kann es sich um einen oder mehrere Ein- oder Mehrkernprozessoren handeln. Ferner umfasst das hier dargestellte Chipkartenterminal 104 ein Steuermodul 138, sowie ein Authentisierungstoken 130, ein Nachiadetoken 132, eine zweite Kommunikationsschnittstelle 134, eine Energiequelle 136, sowie Speichermittel 144. Die Speichermittel 144 können sowohl flüchtige Speichermedien wie beispielsweise RAM-Speicher umfassen, als auch nicht-flüchtige Speichermedien, wie Flash-Speicher, EPROM oder Festplatten.

Bei der Energiequelle 136 kann es sich beispielsweise um eine Batterie oder eine stromerzeugende Einheit wie beispielsweise eine Brennstoffzelle oder eine Solarzelle handeln. Die Verwendung einer solchen abgeschlossenen Energiequelle 134 könnte den Vorteil haben, dass das Chipkartenterminal 104 zum einen vollständig autark und zum anderen auch portabel gestaltet werden kann. Es kann sich bei der Energiequelle 134 jedoch auch um ein Netzteil oder eine andersartige Verbindung zu einer externen Energieversorgung handeln. Dies ist insbesondere bei der Verwendung des Chipkartenterminals 104 als stationäres Terminal sinnvoll. Ferner ist auch eine Kombination aus externer und interner Energieversorgung möglich, was die Ausfallsicherheit des Chipkartenterminals 104 verbessern würde.

Die zweite Kommunikationsschnittstelle 134 des Chipkartenterminals 104 kann beispielsweise zur Administration des Chipkartenterminals 104 ausgebildet sein. Es kann sich beispielsweise bei der Kommunikationsschnittstelle 134 um einen Ethernet-Anschiuss handeln. Der Authentisierungstoken 130 sowie auch der Nachladetoken 132 können sowohl als Softwaretoken als auch als Hardwaretoken zum Beispiel in Form einer Chipkarte zum Einstecken in das Chipkartenterminal 104 ausgeprägt sein. Beispielsweise kann im Falle des Nachladens von Visa-Daten der Nachladetoken 132 von einer Passstelle oder einer diplomatischen Vertretung eines Landes bereitgestellt werden und enthält dann Nutzerdaten 128, welche das Dokument 102 mit einem elektronischen Reisevisum für den Inhaber des Dokuments 102 ausstatten, oder ein in dem Dokument 102 vorhandenes Visum mit Ein- oder Ausreisestempel, sowie entsprechenden Ein- und Ausreisedaten versehen können. Es ist jedoch auch möglich, dass der Nachladetoken 132 fest in dem Chipkartenterminal 104 eingebaut ist. Der Nachladetoken 132 kann dabei auch als Speicherbereich innerhalb des Chipkartenterminals 104 ausgebildet sein.

Die Kommunikationsschnittstelle 116, über welche eine Kommunikation des Chipkartenterminals 104 mit dem Dokument 102 gewährleistet werden soll, weist zusätzlich eine mechanische Aufnahme zur teilweisen oder vollständigen Aufnahme des Dokuments 102 in dem Chipkartenterminal 104 auf. Dabei kann die Aufnahme dergestalt sein, dass er das Dokument 102 zumindest für die Dauer des Nachladevorgangs vor einer Entnahme aus dem Chipkartenterminal 104 durch einen Dokumentenbenutzer schützt. Beispielsweise kann die mechanische Aufnahme das Dokument 102 in das Gehäuse des Chipkartenterminals 104 einziehen, sodass das Dokument 102 nicht mehr greifbar ist. Hierdurch kann während des Nachladevorgangs eine unterbrechungsfreie Kommunikation und Energiezufuhr gewährleistet werden. Die mechanische Aufnahme ist ferner dazu ausgebildet das Dokument 102 nach Beenden der Kompression der Nutzerdaten 140 durch das Chipkartenterminal 104 aus der Aufnahme auszuwerfen. "Auswerfen" kann in diesem Fall sowohl ein Herausschieben des Dokuments 102 aus der Aufnahme bedeuten, als auch ein Auswerfen durch anderweitiges Zugänglichmachen des Dokuments 102, beispielsweise durch Öffnen einer Klappe im Gehäuse des Chipkartenterminals 104.

Das Chipkartenterminal 104 ist dazu ausgebildet, über die Kommunikationsschnittstelle 116 mit dem Dokument 102 zu kommunizieren und Daten auszutauschen. Hierzu kann die Kommunikationsschnittstelle 116 eine Datenverbindung 122 mit der Kommunikationsschnittstelle 106 des Dokuments 102 aufbauen. Dabei kann die Datenverbindung 122 zwischen Dokument 102 und Chipkartenterminal 104 über die Kommunikationsschnittstellen 116 und 106 beispielsweise gemäß ISO 14443 ausgebildet sein. Zum Aufbau einer solchen Datenverbindung 122 kann es vorgesehen sein, dass zunächst ein Identifizierungs- und Authentifizierungsvorgang zwischen dem Dokument 102 und dem Chipkartenterminal 104 ausgeführt wird. Hierzu kann ein entsprechendes Programmmodul 124 in den Prozessormitteln 118 des Chipkartenterminals 104 vorgesehen sein. Beispielsweise kann im Zuge des Authentifizierungsverfahrens ein gegenseitiger Austausch von Sicherheitszertifikaten vorgesehen sein, welche in den Speichermitteln 112 des Dokuments 102 bzw. in einem entsprechenden Authentisierungstoken 130 des Chipkartenterminals 104 abgelegt sind. Die im Sinne der vorliegenden Erfindung möglichen Authentifizierungsverfahren sind jedoch nicht hierauf beschränkt.

Sobald eine sichere Datenverbindung 122 zwischen dem Dokument 102 und dem Chipkartenterminal 104 aufgebaut wurde, können die Prozessormittel 118 des Chipkartenterminals 104 ein weiteres Programmmodul 126 aufrufen, um Nutzerdaten 128, welche in dem Nachladetoken 132 des Chipkartenterminals 104 abgelegt sind, in den Speichermitteln 112 des Dokuments 102 zu speichern. In diesem Fall kann vorgesehen sein, dass zunächst eine Information an das Dokument 102 übermittelt wird, in welcher das Dokument 102 über den zur Speicherung der Nutzerdaten 128 notwendigen Speicherplatz informiert wird. Das Dokument 102 bzw. die Prozessormittel 110 können dann überprüfen, ob in den Speichermitteln 112 ein entsprechend großer zusammenhängender unbelegter Speicherbereich existiert, welcher geeignet ist, die zu installierende Anwendung 128 aufzunehmen.

Stellen die Prozessormittel 110 dabei fest, dass in den Speichermitteln 112 bereits ein ausreichend großer zusammenhängender unbelegter Speicherbereich verfügbar ist, kann das Dokument 102 dem Chipkartenterminal 104 signalisieren, dass es zum Speichern der Nutzerdaten 128 bereit ist. Das Chipkartenterminal 104 übermittelt dann über die Datenverbindung 122 die Nutzerdaten 128 an das Dokument 102 und das Dokument 102 speichert die Nutzerdaten 128 in den Speichermitteln 112.

Stellen jedoch die Prozessormittel 110 nach Benachrichtigung durch das Chipkartenterminal 104 fest, dass die Speichermittel 112 keinen ausreichend großen unbelegten, zusammenhängenden Speicherbereich zur Speicherung der Nutzerdaten 128 bereitstellen können, kann durch die Prozessormittel 110 ein Kompressionsvorgang angestoßen werden um den in dem Dokument 102 vorhandenen Speicher der Speichermittel 112 logisch zu erweitern. Hierzu ist erfindungsgemäß vorgesehen, dass die Nutzerdaten 140 über die Kommunikationsverbindung 122 aus den Speichermitteln 112 des Dokuments 102 in die Speichermittel 144 des Chipkartenterminals 104 übertragen werden. Anschließend wird durch die Prozessormittel 118 des Chipkartenterminals 104 ein weiteres Programmmodul 146 ausgeführt, welches dazu dient, die in den Speichermitteln 144 des Chipkartenterminals 104 zwischengespeicherten Nutzerdaten 140 des Dokuments 102 zu komprimieren.

Bei der Wahl des verwendeten Kompressionsverfahrens kann hierbei grundsätzlich zwischen verlustfreier Kompression und verlustbehafteter Kompression unterschieden werden. Während bei einer verlustfreien Kompression die Nutzerdaten nach Kompression und anschließender Dekompression mit den Ausgangsdaten perfekt übereinstimmen kann bei verlustbehafteter Kompression zumindest ein Teil der Nutzerdaten 140 verfälscht werden. Beinhalten die Nutzerdaten 140 beispielsweise Bilddaten, kann eine verlustbehaftete Kompression ausreichend sein. Sind jedoch Textdaten wie beispielsweise Geburtsdaten, Ein- oder Ausreisedaten oder Passnummern in den Nutzerdaten 140 enthalten kann nur eine verlustfreie Kompression verwendet werden, da bereits eine geringe Abweichung nach Kompression und anschließender Dekompression die Daten unbrauchbar machen könnte.

Sobald die Nutzerdaten 140 durch die Ausführung des Programmmoduls 146 durch die Prozessormittel 118 komprimiert wurden, werden die komprimierten Nutzerdaten 140 über die Kommunikationsverbindung 122 zurück in die Speichermittel 112 des Dokuments 102 übertragen und aus den Speichermitteln 144 des Chipkartenterminals gelöscht. Dabei kann beispielsweise vorgesehen sein, dass die Speichermittel 144 des Chipkartenterminals als flüchtiger Speicher ausgeführt sind, sodass die komprimierten Nutzerdaten 140 automatisch bei einem Abschalten des Chipkartenterminals gelöscht werden.

Neben einer Kompression der Nutzerdaten 140 des Dokuments 102 kann auch eine Kompression der auf das Dokument 102 nachzuladenden Nutzerdaten 128, welche in einem Nachladetoken 132 vorgehalten werden, vorgesehen sein. Dabei muss insbesondere bei Verwendung eines Zertifikats oder einer Signatur zum Nachweis der Echtheit der übertragenen Nutzerdaten 128 darauf geachtet werden, dass durch die Kompression der Nutzerdaten 128 die Signatur der Nutzerdaten 128 nicht verändert wird. Andernfalls kann die Echtheit der Nutzerdaten nicht mehr durch die Prozessormittel 110 des Dokuments 102 überprüft werden. Ferner ist es möglich, dass beim Empfang von Nutzerdaten 128 nur ein Teil der Nutzerdaten 128, beispielsweise die enthaltenen Bilddaten vor dem Speichern in den Speichermitteln 112 komprimiert werden.

Insbesondere bei Verwendung einer verlustfreien Kompression kann der Kompressionsmechanismus auch in Form einer transparenten Schicht in dem Chipkartenterminal 104 ausgeführt sein. Das bedeutet, dass Schreib- oder Lesezugriffe auf die Speichermittel 112 des Dokuments 102 durch das Chipkartenterminal automatisch eine Routine zur Kompression bzw. Dekompression der zu schreibenden oder zu lesenden Daten aufrufen. Somit werden zu schreibende Daten automatisch komprimiert, während zu lesende Daten automatisch dekomprimiert und damit für das Chipkartenterminal 104 nutzbar werden.

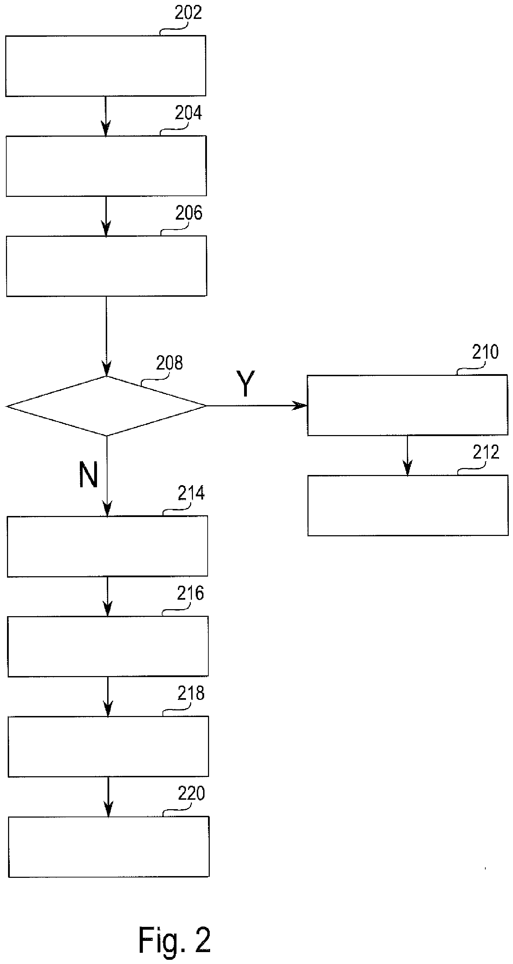

Die Figur 2 zeigt ein Flussdiagram eines beispielhaften Verfahrensablaufs zur Kompression von Nutzerdaten 140 eines Dokuments 102 durch ein Chipkartenterminal 104. Dabei wird beispielhaft angenommen, dass es sich bei dem Dokument 102 um einen elektronischen Reisepass handelt. Für ein intuitiveres Verständnis der Erfindung bzw. einer konkreten Anwendung der Erfindung ist die nachfolgend dargestellte Situation eine Passkontrolle beispielsweise bei der Einreise in ein Land. Dabei kommt der Reisende bzw. Dokumenteninhaber zunächst mit seinem Reisepass zu einer Passkontrolle bspw. an einem Flughafen 202. Zur Einreise verlangen viele Länder ein Visum, welches bei der Einreise mit einem Stempel der Passstelle, sowie einem Einreisedatum versehen wird. Dabei kann beispielsweise der Stempel der Passstelle auch auf elektronischem Wege in dem Reisepass gespeichert werden. Hierzu kann an einer Passstelle ein Chipkartenterminal 104 vorgesehen sein, welches dazu ausgebildet ist, Visa-Daten in einem elektronischen Reisepass abzurufen und mit Stempeln und Daten zu versehen.

Soll nun ein in dem Reisepass vorgehaltenes Visum mit einem Stempel und einem Ein- / Ausreisedatum versehen werden 204, wird erfindungsgemäß der Reisepass zunächst dem Chipkartenterminal 104 zugeführt, beispielsweise indem der Reisepass in einen mechanischen Einzug des Chipkartenterminals 104 eingesetzt wird 206. Das Chipkartenterminal zieht dann den Reisepass in den mechanischen Einzug ein, sodass der Reisepass durch den Passinhaber nicht mehr aus dem Chipkartenterminal 104 entfernt werden kann. Ferner wird zwischen dem Reisepass und dem Chipkartenterminal 104 eine sichere Kommunikationsverbindung 122 aufgebaut.

Da insbesondere Stempel als Bilddaten mitunter einen großen Speicherbedarf haben, wird anschließend durch das Chipkartenterminal 104 geprüft, ob auf dem Reisepass ein ausreichend großer, freier Speicherbereich vorhanden ist um die nachzuladenden Daten auf dem Reisepass zu speichern 208. Ist dies der Fall versieht das Chipkartenterminal 104 ein in dem Reisepass vorhandenes Visum mit Daten und Stempeln durch Speicherung der entsprechenden Daten in dem Speicher des Reisepasses 210 und wirft anschließend den Reisepass aus dem mechanischen Einzug des Chipkartenterminals 104 aus.

Wird jedoch festgestellt, dass der Speicher des Reisepasses nicht ausreicht um die nachzuladenden Daten aufzunehmen, ist vorgesehen, dass die Nutzerdaten 140 des Reisepasses aus dem Speicher 112 des Reisepasses über die Kommunikationsverbindung 122 in den Speicher 144 des Chipkartenterminals 104 übertragen werden 214. Anschließend führt das Chipkartenterminal 104 eine Kompression der empfangenen Nutzerdaten 140 durch 216 und überträgt die komprimierten Nutzerdaten 140 zurück in den Speicher 112 des Reisepasses. Wenn durch diesen Kompressionsvorgang ein ausreichend großer freier Speicherbereich in dem Speicher 112 des Reisepasses geschaffen wurde, wird anschließend das in dem Reisepass gespeicherte Visum durch Speicherung der entsprechenden Daten mit Stempel und Ein- /Ausreisedatum versehen 218. Anschließend wird der Reisepass aus dem Chipkartenterminal 104 ausgeworfen 220.

### Bezugszeichenliste

- 100: System
- 102: Dokument
- 104: Chipkartenterminal
- 106: Kommunikationsschnittstelie
- 108: Nutzdaten
- 110: Prozessormittel
- 112: Speichermittel
- 114: Anwendungen
- 116: Kommunikationsschnittstelle
- 118: Prozessormittel
- 120: Chipkartenbetriebssystem
- 122: Datenverbindung
- 124: Programmmodul
- 126: Programmmodul
- 128: Nutzerdaten
- 130: Authentisierungstoken
- 132: Nachladetoken
- 134: Kommunikationsschnittstelle
- 136: Energiequelle
- 138: Steuermodul
- 140: Nutzerdaten
- 142: flüchtiger Speicher
- 144: Speichermittel
- 146: Programmmodul

## Patentansprüche

1. Verfahren zur Kompression von Nutzerdaten (140) eines Dokuments (102) durch ein Chipkartenterminal (104), wobei das Dokument (102) mindestens einen geschützten nicht-flüchtigen Speicher (112) mit darin gespeicherten Nutzerdaten (140) aufweist, wobei das Chipkartenterminal (104) mindestens einen elektronischen Speicher (144), ein geschlossenes Gehäuse und einen mechanischen Einzug aufweist, wobei der mechanische Einzug dazu ausgebildet ist, das Dokument (102) gegen eine Entnahme aus dem Chipkartenterminal (104) zu sichern, wobei das Verfahren die folgende Schritte aufweist:
• Einziehen des Dokuments (102) in den mechanischen Einzug des Chipkartenterminals (104), sodass sich das Dokument (102) nach dem Einziehen vollständig innerhalb des Gehäuses des Chipkartenterminals (104) befindet,
• Übertragen der Nutzerdaten (140) aus dem nicht-flüchtigen Speicher (112) des Dokuments (102) in den elektronischen Speicher (144) des Chipkartenterminals (104),
• Komprimieren der Nutzerdaten (140) durch das Chipkartenterminal (104),
• Übertragen der komprimierten Nutzerdaten (140) in den nichtflüchtigen Speicher (112) des Dokuments (102),
• Auswerfen des Dokuments (102) aus dem mechanischen Einzug.

2. Verfahren nach Anspruch 1, wobei das Dokument (102) eine erste kontaktlose Kommunikationsschnittstelle (106) aufweist, wobei das Chipkartenterminal (104) eine zweite kontaktlose Kommunikationsschnittstelle (116) aufweist, wobei das Verfahren ferner das Aufbauen einer Kommunikationsverbindung (122) zwischen dem Chipkartenterminal (104) und dem Dokument (102) über die erste (106) und zweite (116) kontaktlose Kommunikationsschnittstelle beinhaltet, wobei das Übertragen der Nutzerdaten (140) in den elektronischen Speicher (144) des Chipkartenterminals (104) und das Übertragen der komprimierten Nutzerdaten (140) in den nicht-flüchtigen Speicher (112) des Dokuments (102) über die Kommunikationsverbindung (122) erfolgt.

3. Verfahren nach Anspruch 2, wobei das Aufbauen der Kommunikationsverbindung (122) eine gegenseitige Authentisierung des Chipkartenterminals (104) und des Dokuments (102) beinhaltet, wobei durch die Authentisierung ein sicherer Kommunikationskanal (122) zwischen Chipkartenterminal (104) und Dokument (102) aufgebaut wird, wobei die Nutzerdaten (140) ausschließlich über den sicheren Kommunikationskanal (122) übermittelt werden, wobei das Chipkartenterminal (104) nach erfolgreicher Authentisierung gegenüber dem Dokument (102) Zugriff auf in dem nicht-flüchtigen Speicher (112) des Dokuments (102) gespeicherte Nutzerdaten (140) erhält.

4. Verfahren nach Anspruch 3, wobei die gegenseitige Authentisierung ein Challenge-Response Verfahren beinhaltet.

5. Verfahren nach einem der vorhergehenden Ansprüche, wobei das Chipkartenterminal (104) nach dem Übertragen der komprimierten Nutzerdaten (140) in den nicht-flüchtigen Speicher (112) des Dokuments (102) die komprimierten Nutzerdaten (140) aus dem elektronischen Speicher (144) des Chipkartenterminals (104) löscht.

6. Verfahren nach einem der vorhergehenden Ansprüche, wobei es sich bei dem elektronischen Speicher (144) des Chipkartenterminals (104) um einen flüchtigen Speicher handelt.

7. Verfahren nach einem der vorhergehenden Ansprüche, ferner mit einem Nachladetoken (132), wobei auf das Dokument (102) nachzuladende Daten (128) auf dem Nachladetoken (132) enthalten sind, wobei der Nachladetoken (132) zu Beginn des Verfahrens mit dem Chipkartenterminal (104) verbunden wird, wobei die Verbindung zwischen Chipkartenterminal (104) und Nachladetoken (132) für eine Datenübertragung zwischen Chipkartenterminal (104) und Nachladetoken (132) ausgebildet ist, wobei das Chipkartenterminal (104) dazu ausgebildet ist, die nachzuladenden Daten (128) aus dem Nachladetoken (132) zu extrahieren, zu komprimieren und in den nicht-flüchtigen Speicher (112) des Dokuments (102) zu übertragen.

8. Verfahren nach Anspruch 7, wobei das Dokument (102) ein Zertifikat mit einem öffentlichen Schlüssel eines asymmetrischen Schlüsselpaares enthält, wobei die auf das Dokument (102) nachzuladenden Daten (128) eine kryptografische Signatur enthalten, wobei das Dokument (102) dazu ausgebildet ist, nach Empfang der nachzuladenden Daten (128) vom Chipkartenterminal (104) die kryptografische Signatur der empfangenen Daten (128) mit dem öffentlichen Schlüssel des Zertifikats zu verifizieren, wobei das Dokument (102) nachgeladene Daten (128), deren Signatur nicht mit dem öffentlichen Schlüssel verifiziert werden kann, aus dem nicht-flüchtigen Speicher (112) des Dokuments (102) löscht.

9. Verfahren nach Anspruch 6, wobei es sich bei den nachzuladenden Daten (128) um Visa-Daten handelt.

10. Chipkartenterminal (104) mit einem elektronischen Speicher (144) und einem mechanischen Einzug, wobei der mechanische Einzug dazu ausgebildet ist, ein Dokument (102) gegen eine Entnahme des Dokuments (102) aus dem Chipkartenterminal (104) zu sichern, wobei das Chipkartenterminal (104) dazu ausgebildet ist:
• Das Dokument (102) in den mechanischen Einzug einzuziehen,
• Nutzerdaten (140) von dem Dokument (102) zu empfangen und/oder aus dem Dokument (102) zu extrahieren,
• Die Nutzerdaten (140) zu komprimieren,
• Die komprimierten Nutzerdaten (140) an das Dokument (102) zu übermitteln, und
• Das Dokument (102) aus dem mechanischen Einzug auszuwerfen.

11. Chipkartenterminal (104) nach Anspruch 10, wobei das Chipkartenterminal (104) Befestigungsmittel aufweist, wobei die Befestigungsmittel dazu ausgebildet sind, das Chipkartenterminal (104) an einem Standort dauerhaft zu befestigen.

12. Elektronisches System (100) mit einem Chipkartenterminal (104) nach Anspruch 10 oder 11 und einem Dokument (102), wobei das Dokument (102) mindestens einen nicht-flüchtigen Speicher (112) mit darin enthaltenen Nutzerdaten (140) aufweist.

13. Elektronisches System (100) nach Anspruch 12, wobei es sich bei dem Dokument (102) um ein elektronisches Ausweisdokument, insbesondere einen Reisepass, Personalausweis, Visa, Führerschein, Fahrzeugschein, Fahrzeugbrief, Firmenausweis, eine Gesundheitskarte, und/oder um elektronische Zahlungsmittel, insbesondere eine Banknote, Bankkarte, Kreditkarte, Frachtbriefe und/oder sonstige Berechtigungsnachweise handelt.

## Claims

1. A method for compressing user data (140) of a document (102) by means of a chip card terminal (104), wherein the document (102) has at least one protected non-volatile memory (112) having user data (140) stored therein, wherein the chip card terminal (104) has at least one electronic memory (144), a closed housing, and a mechanical draw-in device, wherein the mechanical draw-in device is designed to secure the document (102) against removal from the chip card terminal (104), wherein the method comprises the following steps:
• drawing the document (102) into the mechanical draw-in device of the chip card terminal (104) such that the document (102) is completely inside the housing of the chip card terminal (104) after the drawing in,
• transferring the user data (140) from the non-volatile memory (112) of the document (102) into the electronic memory (144) of the chip card terminal (104),
• compressing the user data (140) by the chip card terminal (104),
• transferring the compressed user data (140) into the non-volatile memory (112) of the document (102),
• ejecting the document (102) from the mechanical draw-in device.

2. The method according to claim 1, wherein the document (102) has a first contactless communication interface (106), wherein the chip card terminal (104) has a second contactless communication interface (116), wherein the method also includes the establishment of a communications connection (122) between the chip card terminal (104) and the document (102) via the first (106) and second (116) contactless communication interface, wherein the user data (140) are transferred into the electronic memory (144) of the chip card terminal (104) and the compressed user data (140) are transferred into the non-volatile memory (112) of the document (102) via the communications connection (122).

3. The method according to claim 2, wherein the establishment of the communications connection (122) includes a mutual authentication of the chip card terminal (104) and of the document (102), wherein a secure communications channel (122) is established between the chip card terminal (104) and document (102) as a result of the authentication, wherein the user data (140) are transmitted exclusively via the secure communications channel (122), wherein the chip card terminal (104) obtains access to user data (140) stored in the non-volatile memory (112) of the document (102) following successful authentication to the document (102).

4. The method according to claim 3, wherein the mutual authentication includes a challenge-response process.

5. The method according to any one of the preceding claims, wherein the chip card terminal (104), following the transfer of the compressed user data (140) into the non-volatile memory (112) of the document (102), deletes the compressed user data (140) from the electronic memory (144) of the chip card terminal (104).

6. The method according to any one of the preceding claims, wherein the electronic memory (144) of the chip card terminal (104) is a volatile memory.

7. The method according to any one of the preceding claims, further comprising a download token (132), wherein data (128) to be downloaded to the document (102) are contained on the download token (132), wherein the download token (132) is connected to the chip card terminal (104) at the start of the method, wherein the connection between chip card terminal (104) and download token (132) is designed for a data transfer between chip card terminal (104) and download token (132), wherein the chip card terminal (104) is designed to extract the data (128) to be downloaded from the download token (132), to compress it, and to transfer it into the non-volatile memory (112) of the document (102).

8. The method according to claim 7, wherein the document (102) contains a certificate with a public key of an asymmetric key pair, wherein the data (128) to be downloaded to the document (102) contain a cryptographic signature, wherein the document (102) is designed, following receipt of the data (128) to be downloaded from the chip card terminal (104), to verify the cryptographic signature of the received data (128) with the public key of the certificate, wherein any downloaded data (128) for which the signature cannot be verified with the public key is deleted from the non-volatile memory (112) of the document (102) by the document (102).

9. The method according to claim 6, wherein the data (128) be downloaded are visa data.

10. A chip card terminal (104) having an electronic memory (144) and a mechanical draw-in device, wherein the mechanical draw-in device is designed to secure a document (102) against removal of the document (102) from the chip card terminal (104), wherein the chip card terminal (104) is designed:
• to draw the document (102) into the mechanical draw-in device,
• to receive user data (140) from the document (102) and/or to extract said data from the document (102),
• to compress the user data (140),
• to transmit the compressed user data (140) to the document (102), and
• to eject the document (102) from the mechanical draw-in device.

11. The chip card terminal (104) according to claim 10, wherein the chip card terminal (104) has fastening means, wherein the fastening means are designed to permanently fasten the chip card terminal (104) at one location.

12. An electronic system (100) comprising a chip card terminal (104) according to claim 10 or 11 and a document (102), wherein the document (102) has at least one non-volatile memory (112) with user data (140) contained therein.

13. The electronic system (100) according to claim 12, wherein the document (102) is an electronic identification document, in particular a passport, personal identity card, visa, driver's licence, vehicle certificate, vehicle registration document, company identification document, health insurance card and/or electronic payment means, in particular a banknote, bank card, credit card, consignment note and/or other proof of authority.

## Revendications

1. Procédé de compression de données d'utilisateur (140) d'un document (102) par un terminal de carte à puce (104), le document (102) présentant au moins une mémoire sécurisée non volatile (112) avec des données d'utilisateur (140) y étant stockées, le terminal de carte à puce (104) présentant au moins une mémoire électronique (144), un boîtier fermé et un moyen d'insertion mécanique, où le moyen d'insertion mécanique est prévu pour sécuriser le document (102) contre un retrait à partir du terminal de carte à puce (104), le procédé présentant les étapes suivantes :
• l'insertion du document (102) dans le moyen d'insertion mécanique du terminal de carte à puce (104) de sorte que le document (102) se trouve totalement à l'intérieur du boîtier du terminal de carte à puce (104) après l'insertion,
• la transmission des données d'utilisateur (140) à partir de la mémoire non volatile (112) du document (102) dans la mémoire électronique (144) du terminal de carte à puce (104),
• la compression des données d'utilisateur (140) par le terminal de carte à puce (104),
• la transmission des données d'utilisateur (140) comprimées dans la mémoire non volatile (112) du document (102),
• l'éjection du document (102) hors du moyen d'insertion mécanique.

2. Procédé selon la revendication 1, dans lequel le document (102) présente une première interface de communication (106) sans contact, dans lequel le terminal de carte à puce (104) présente une deuxième interface de communication (116) sans contact,
où le procédé contient en outre l'établissement d'une connexion de communication (122) entre le terminal de carte à puce (104) et le document (102) par le biais de la première (106) et de la deuxième (116) interface de communication sans contact, où la transmission des données d'utilisateur (140) dans la mémoire électronique ((144) du terminal de carte à puce (104) et la transmission des données d'utilisateur (140) comprimées dans la mémoire non volatile (112) du document (102) ont lieu par le biais de la connexion de communication (122).

3. Procédé selon la revendication 2, dans lequel l'établissement de la connexion de communication (122) contient une authentification réciproque du terminal de carte à puce (104) et du document (102), où un canal de communication (122) sécurisé entre le terminal de carte à puce (104) et le document (102) est établi par l'authentification, où les données d'utilisateur (140) sont transmises exclusivement par le biais du canal de communication (122) sécurisé, où le terminal de carte à puce (104), après l'authentification réussie vis-à-vis du document (102), obtient l'accès aux données d'utilisateur (140) stockées dans la mémoire non volatile (112) du document (102).

4. Procédé selon la revendication 3, dans lequel l'authentification réciproque contient un procédé de défi et de réponse.

5. Procédé selon l'une des revendications précédentes, dans lequel le terminal de carte à puce (104) efface les données d'utilisateur (140) comprimées à partir de la mémoire électronique (144) du terminal de carte à puce (104) après la transmission des données d'utilisateur (140) comprimées dans la mémoire non volatile (112) du document (102).

6. Procédé selon l'une des revendications précédentes, dans lequel, dans le cas de la mémoire électronique (144) du terminal de carte à puce (104), il s'agit d'une mémoire volatile.

7. Procédé selon l'une des revendications précédentes, doté en outre d'un jeton de recharge (132), où des données (128) à recharger sur le document (102) sont contenues sur le jeton de recharge (132), où le jeton de recharge (132) est relié avec le terminal de carte à puce (104) pour le début du procédé, où la liaison entre le terminal de carte à puce (104) et le jeton de recharge (132) est prévue pour une transmission de données entre le terminal de carte à puce (104) et le jeton de recharge (132), où le terminal de carte à puce (104) est prévu pour extraire les données à recharger (128) du jeton de recharge (132), les comprimer et les transmettre dans la mémoire non volatile (112) du document (102).

8. Procédé selon la revendication 7, dans lequel le document (102) contient un certificat avec une clé publique d'une paire de clés asymétrique, où les données à recharger (128) sur le document (102) contiennent une signature cryptographique, où le document (102) est prévu, après la réception des données à recharger (128) du terminal de carte à puce (104), pour vérifier la signature cryptographique des données reçues (128) avec la clé publique du certificat, où le document (102) efface de la mémoire non volatile (112) du document (102) des données rechargées (128) dont la signature n'a pas pu être vérifiée avec la clé publique.

9. Procédé selon la revendication 6, dans lequel, dans le cas des données à recharger (128), il s'agit de données de visa.

10. Terminal de carte à puce (104) doté d'une mémoire électronique (144) et d'un moyen d'insertion mécanique, le moyen d'insertion mécanique étant prévu pour sécuriser un document (102) contre un retrait du document (102) à partir du terminal de carte à puce (104), où le terminal de carte à puce (104) est prévu pour :
• insérer le document (102) dans le moyen d'insertion mécanique,
• recevoir des données d'utilisateur (140) du document (102) et/ou les extraire du document (102),
• comprimer les données d'utilisateur (140),
• transmettre les données d'utilisateur (140) comprimées au document (102), et
• éjecter le document (102) hors du moyen d'insertion mécanique.

11. Terminal de carte à puce (104) selon la revendication 10, où le terminal de carte à puce (104) présente des systèmes de fixation, où les systèmes de fixation sont prévus pour fixer de manière durable le terminal de carte à puce (104) à un endroit.

12. Système électronique (100) doté d'un terminal de carte à puce (104) selon la revendication 10 ou la revendication 11 et d'un document (102), où le document (102) présente au moins une mémoire non volatile (112) avec des données d'utilisateur (140) contenues à l'intérieur.

13. Système électronique (100) selon la revendication 12, dans lequel, dans le cas du document (102), il s'agit d'un document d'identité électronique, notamment d'un passeport, d'une carte d'identité, d'un visa, d'un permis de conduire, d'une carte d'immatriculation de véhicule, d'un titre de propriété de véhicule, d'une carte d'entreprise, d'une carte de santé et/ou d'un moyen de paiement électronique, notamment d'un billet de banque, d'une carte bancaire, d'une carte de crédit, de connaissements et/ou d'autres certificats d'autorisation.
